# EUROPEAN PATENT APPLICATION

(11) **EP 0 741 975 A1**
(43) Date of publication of application: **13.11.1996**
(21) Application number: 96302916.0
(22) Date of filing: 25.04.1996
(51) Int. Cl.: A23C 9/13, A23C 9/137

(54) **Process for producing yoghurt and yoghurt products**

(30) Priority: 10.05.1995 JP 111638/95
(71) Applicant: FUJI OIL COMPANY, LIMITED, Osaka-shi, Osaka-fu 542 (JP)
(72) Inventor: Sakaue, Yoshiko, Kumatori-cho, Sennan-gun, Osaka-fu (JP); Sawamura, Norio, Hashimoto-shi, Wakayama-ken (JP); Yokoyama, Hitoshi, Izumisano-shi, Osaka-fu (JP); Minato, Tetsuji, Kaizuka-shi, Osaka-fu (JP)
(74) Representative: Baverstock, Michael George Douglas

(57) **Abstract**

A yogurt suitable for use for example as an ingredient in confections and bakery products is produced by fermenting a cream mix comprising 2 to 15% by weight of a protein component, 2 to 15% by weight of a carbohydrate assimilable by lactic acid bacteria, 5 to 30% by weight of a fat component, 40 to 80% by weight of water and an emulsifier with a lactic acid bacterium, and prior to, during or after fermentation adding a stabilizer in an amount of 0.2 to 5% by weight based on the total weight of the cream mix. A yogurt product composed of the yogurt obtained by the above process admixed with a fruit product is also described.

## Description

The present invention relates to a process for producing yogurt and yogurt products. More specifically, it relates to a process for producing yogurt which has good mouthfeel and flavor witha less unpleasant fermentation flavour, which can easily be used as an ingredient without dehydration in the production of confections and bakery products such as bread, which has a hardness suitable for the use as a spread which is hardly affected by ambient temperature, and which has soft paste-like properties with constant spreadability. In addition, the present invention also relates to yogurt products wherein fruit products are added to the yogurt obtained by the process of the present invention.

Recently, yogurt which is a fermented milk product has been used as an ingredient for the production of confections. However, in general, yogurt has a high water content and a very light flavor. Therefore, for using yogurt in the production of baked confections such as cakes and cookies, it must be used in large amount and therefore there are such disadvantages that kinds of confections suitable for using yogurt as an ingredient are limited and a yogurt flavour is hardly detectable unless it is dehydrated by pressing. Also, yogurt does not have the heat resistance required for a filling ingredient and, when using yogurt in bakery products, it tends to soak into the product. Further, hitherto, as an ingredient for the production of confections and bakery products, sour cream obtained by fermenting cream with lactic acid bacteria has been used. The water content of sour cream is generally lower than that of yogurt and therefore it has less influence on dough properties. However, sour cream has less non-fat milk solids and proteins and, in many cases, its flavor emerges insufficiently and an unpleasant fermentation taste is given. Therefore, it is desired to develop yogurt which can be widely used in the production of confections and bakery products.

On the other hand, as a spread to be used for the production of bakery products, there have often been used mayonnaise which is an oil-in-water type emulsion and margarine which is a water-in-oil type emulsion. However, both of them have a high oil content and therefore, in many cases, they cause migration of their fat phases into the inside of bakery products and deterioration of mouthfeel and flavor. Further, since both of them have less integrity with other ingredients such as ham and cutlets, such ingredients tend to separate from the bakery products. In particular, the latter, margarine, has defects in that its hardness is apt to be affected by ambient temperature and is reduced under high temperature conditions such as in summer, which results in unstable spreadability. Furthermore, margarine does not have the heat resistance required for a filling ingredient. In addition, although cream cheese which is a fermented milk product is used, its spreadability is quite low because of its hardness and cream cheese does not have the heat resistance required f a filling ingredient, either.

Under these circumstances, JP-A 61-152227 describes a process for producing a bakery product such as bread using a lactic acid fermentation product which is obtained by fermenting a filled cream comprising an aqueous solution containing non-fat milk solids, fats and oils and an emulsifier with a lactic acid bacterium and pasteurizing or sterilizing with heating. JP-A 64-39927 describes a process for producing a lactic acid fermentation product by fermenting a filled cream comprising fats and oils containing a certain amount of butyric acid, an aqueous solution containing non-fat milk solids and emulsifier with a lactic acid bacterium and pasteurizing or sterilizing with heating. However, both products are soft and scarcely have spreadability. Further, they are mainly used as agents for improving the properties of bakery products and therefore they do not positively give a yogurt flavor to confections and bakery products such as bread.

One object of the present invention is to provide an economic process for producing yogurt which has good mouthfeel and flavor with a less unpleasant fermentation flavor, which can easily be used as an ingredient without any complicated treatment such as dehydration in the production of confections and bakery products such as bread, which has good heat resistance suitable for a filling ingredient, which does not exhibit such an oily appearance as margarine and mayonnaise upon use as a spread, for example, for bread, which has suitable compatability with other ingredients, which has a hardness hardly affected by ambient temperature, and which has stable spreadability.

Another object of the present invention is to provide a yogurt product wherein a fruit product is added to the yogurt obtained by the above process.

These objects as well as other objects and advantages of the present invention will become apparent from the following description.

As a result of the present inventors' intensive study it has been found that by fermenting a cream mix having a specific composition with lactic acid bacteria, yogurt which has a mouthfeel and flavor better than those of conventional yogurt with a less unpleasant fermentation flavor, which has pressing properties suitable for a filling ingredient, which does not exhibit such an oily appearance as margarine and mayonnaise uponuse as a spread, for example, for bread, which has suitable compatability with other ingredients, which has a hardness hardly affected by ambient temperature and which has stable spreadability, can be obtained.

Specifically, according to the present invention there is provided a process for producing yogurt which comprises fermenting a cream mix comprising 2 to 15% by weight of a protein component, 2 to 15% by weight of a carbohydrate assimilable by lactic acid bacteria, 5 to 30% by weight of a fat component, 40 to 80% by weight of water and an emulsifier with a lactic acid bacterium, and prior to, during or after fermentation adding a stabilizer in an amount of 0.2 to 5% by weight based on the total weight of the cream mix.

The present invention also provides a yogurt product comprising the yogurt obtained by the above process admixed with a fruit product.

The cream mix in the present invention contains 2 to 15% by weight, preferably, 4 to 10% by weight of a protein component based on the total weight of the cream mix. When the amount of the protein component is toosmall, the yogurt flavor becomes too light and its body is lost because of insufficient fermentation due to lowering of the buffer capacity of the mix. In an extreme case,the emulsion is broken by imbalance of fat and protein components. On the other hand, when the amount of the protein component is too large, the texture of the product becomes crumbly, like cheese and it is undesirable.

Examples of the protein component include milk, processed milk, fresh cream, skimmed milk, skimmed milk powder, whole milk powder, caseins (e.g., acid casein, rennet casein and sodium caseinate), milk proteins derived, for example, from whey protein and various vegetable proteins. These proteins can be used alone or in combination thereof.

The carbohydrate assimilable by lactic acid bacteria is contained in the mix in an amount of 2 to 15% by weight, preferably 4 to 10% by weight. When the amount of the carbohydrate is too small, brewing of the flavor by fermentation with a lactic acid bacterium is insufficient. On the other hand, when the amount is too large, there is too much flavor formation and an unpleasant flavor is caused. This is undesirable Examples of the carbohydrate assimilable by lactic acid bacteria include skimmed milk powder, and lactose derived from milk products or synthesized by glucose and galactose.

Glucose can also be used. These carbohydrates can be used alone or in combination.

The fat component is contained in the mix in an amount of 5 to 30% by weight, preferably 10 to 25% by weight. When the amount of the fat component is too small, it is difficult to provide a suitable body to the product. On the other hand, when the amount is too large, an oily mouthfeel results and is undesirable. Examples of the fat component include vegetable fats and oils such as rapeseed oil, soybean oil, sunflower seed oil, cotton seed oil, peanut oil, rice bran oil, corn oil, safflower oil, olive oil, kapok oil, sesame oil, evening primrose oil, palm oil, shea butter, sal fat, cacao butter, coconut oil, and palm kernel oil, animal fats and oils such as milk fat, tallow, lard, fish oils, and whale oils and their processed products such as hydrogenated, fractionated and interesterified products. These fats and oils can be used alone or in combination. Further, milk products such as butter and fresh cream can be used as milk fat sources.

Water is contained in an amount of 40 to 80% by weight. When the amount of water is too small, the resultant emulsion state becomes unstable and the viscosity of the mix tends to increase, which results in deterioration of workability and spreadability. On the other hand, when the amount is too large, the product becomes too soft, which also results in deterioration of workability and spreadability.

The stabilizer is added in an amount of 0.2 to 5% by weight, preferably 0.5 to 4% by weight based on the total weight of the mix. The stabilizer can be added at any stage, i.e., prior to, during or after lactic acid fermentation. With a view to stable working, it is desirable to add the stabilizer after lactic acid fermentation. Examples of the stabilizer include gums such as locust bean gum, guargum, xanthan gum, andgumarabic, cellulose derivatives such as finely-divided cellulose, carboxymethylcellulose, water-soluble hemicellulose, starch such as corn starch, rice starch, potato starch, tapioca starch, wheat starch, sweet potato starch and modified starch such as phosphate starch and α-starch.

They can be used alone or in combination. In particular, in the present invention, when starch is used as the stabilizer, yogurt having a heat resistance suitable for a filling ingredient and properties suitable for a spread can be obtained.

By using these components the cream mix is prepared. Upon preparing the cream mix, an emulsifier is used. The emulsifier is not specifically limited and any known emulsifier can be used. Examples of the emulsifier include lecithin, lecithin fractionated for example with an alcohol, lecithin partially hydrolyzed with an acid or alkali or an enzyme, sucrose fatty acid esters, propylene glycol fatty acid esters, sorbitan fatty acid esters, glycerin fatty acid esters, polyglycerol fatty acid esters and various organic acid monoglycerides such as acetic acid monoglyceride, tartaric acid monoglyceride, acetic acid tartaric acid mixed monoglyceride, citric acid monoglycerides, diacetyl tartaric acid monoglyceride, lactic acid monoglyceride, succinic acid monoglyceride and malic acid monoglyceride. One or more of them are added in an amount of 0.05 to 5% by weight, preferably 0.1 to 2% by weight based on the weight of the fat component.

In addition to the above emulsifier, known additives such as calcium salts and phosphates can be used.

The cream mix can be prepared according to a conventional manner by using the above components. The cream mix may be a naturally occurring fresh cream which is suitably diluted with milk, skimmed milk and the like. Then, in general, after subjecting to homogenization, pasteurization or sterilization and cooling steps, the cream mix is subjected to fermentation with one or more lactic acid bacteria. The lactic acid fermentation is carried out by using a yogurt starter at 20 to 50°C until the fermented mixture is made to pH 3.50 to 5.0, preferably pH 3.8 to 4.8. Alternatively, after the fermentation, the pH can also be adjusted to a suitable range with an organic acid or an alkaline salt such as those commonly used for this purpose. When pH is too high, the shelf life of the product tends to be shorter. On the other hand, when the pH is too low, the sour flavor becomes too strong to harmonize the flavor of the product as a whole when used as a kneading or blending ingredient, a filling ingredient or a spread. Therefore, the above pH range is preferred. Then, the product is pasteurized or sterilized with heating, preferably at 60 to 95°C.

The lactic acid bacteria to be used for fermentation of yogurt may be bacteria classified into thermophiles which can be utilized in the production of conventional yogurt and any lactic acid bacteria of the genus Lactobacillus alone or a combination of bacteria of the genera Lactobacillus and Streptococcus can be used. Specifically, examples of bacteria of the genus Lactobacillus include Lactobacillus bulgaricus, Lactobacillus lactis, Lactobacillus delbrueckii, Lactobacillus helveticus and Lactobacillus acidophilus. As bacteria of the genus Streptococcus, there is, for example, Streptococcus thermophilus.

Furthermore, there can be used suitable amounts of one or more other additives, for example flavors such as butter flavor, milk flavor and cheese flavor for giving an additionalflavor together with a yogurt flavor, various seasonings, fruit pastes and fruit powders, mono- and oligosaccharides such as sucrose, glucose and fructose for giving sweetness, sugar alcohols such as sorbitol, maltitole and lactitole, sweeteners such as aspartame, stevioside and thaumatin, and coloring agents such as β-carotene and annatto pigment.

As the final workup stage of the above steps, homogenization and cooling are carried out. The homogenization is carried out at a temperature of the product of not lower than 40°C, preferably 70 to 90°C and the homogenization pressure is suitably 0 to 200 kg/cm².

The yogurt thus obtained has a soft paste-like appearance and a good flavor. The hardness of the product is within the range of 10 to 150 g/0.785 cm², preferably 20 to 80 g/0.785 cm² in terms of the value measured with the Rheometer manufactured by Fudo Kogyo, Japan at a temperature of the product of 5°C by using a plunger of 1 cm diameter at a table moving rate of 5 cm/min. In addition, the product has spreadability suitable for a spread.

A yogurt product of the present invention is produced by ununiformly dispersing fruit products such as fruit jam in the yogurt thus obtained. For example, a yogurt product wherein a fruit product is admixed in a layer or marble state has not only a good flavor but also a good appearance and is desired. Suchayogurt product can be produced by admixing one or more fruit products with the yogurt of the present invention with, for example, a static mixer.

The following Examples and Comparative Examples further illustrate the present invention in detail but are not to be construed to limit the scope thereof. In the Examples and Comparative Examples, all "parts" and "percents" are by weight unless otherwise stated.

### Example 1

A hydrogenated rapeseed oil (melting point 31°C) (19 parts) was warmed and to this were added lecithin (0.05 part) and monoglyceride (0.05 part). The mixture was dissolved with stirring to prepare an oil phase. Separately, water (65 parts) was warmed to about 30°C and skimmed milk powder (16 parts) was added by portions with stirring by a homomixer to prepare an aqueous phase.

After pre-emulsifying the above oil phase in the above aqueous phase at 70°C for 30 minutes, the emulsified material was pasteurized at 90°C for 5 minutes, homogenized at a pressure of 100 kg/cm² and then rapidly cooled to 40°C to obtain a cream mix. The cream mix contained 19.0% of the fat component, 5.3% of the protein component, 65.0% of water, 8.8% of saccharide assimilable with lactic acid bacteria and 1.9% of ash.

To the cream mix thus obtained was added a yogurt starter (1 part, mixed strain of Lactobacillus bulgaricus and Streptococcus thermophilus) and fermentation was carried out at 37°C for 10 hours to obtain a liquid fermentation product at pH 4.2. The fermentation product was pasteurized by heating at 80°C for 30 minutes. To the fermentation product (100 parts) were added corn starch (1 part), salt (0.1 part) and milk flavor (0.05 part) and the mixture was kneaded at 80°C for 10 minutes. After homogenization at a pressure of 100 kg/cm², the mixture was filled into a plastic film tube, sealed and rapidly cooled to 5°C to obtain the desired yogurt.

The yogurt thus obtained had, as is seen from the Comparative Examples hereinafter, good spreadability and heat resistance and exhibited a soft paste-like state. Also, in comparison with commercially available yogurt, it had higher hardness and a good fermentation flavor. When it was used as a spread for bread, it did not cause any severe soaking in the bread as experienced with commercially available margarine and mayonnaise and, when it was used as sandwich with, for example, a cutlet, it had better compatability with the filled ingredient than that of a conventional spread. Furthermore, it showed stable spreadability despite change of ambient temperature.

### Comparative Example 1

Water (80 parts) was warmed at about 30°C and skimmed milk powder (16 parts) was added thereto and dissolved therein by portions with stirring by a homomixer to prepare an aqueous phase. Also, a hydrogenated rapeseed oil (melting point 31°C) (4 parts) was warmed at 60°C and to this were added lecithin (0.05 part) and monoglyceride (0.05 part). These were mixed and pre-emulsified at 70°C for 30 minutes. After pasteurizing at 90°C for 5 minutes, the mixture was homogenized with a homogenizer at 100 kg/cm² and rapidly cooled to 20°C to prepare a cream mix. The cream mix contained 4.0% of the fat component, 5.3% of the protein component, 80% of water, 8.8% of saccharide assimilable by lactic acid bacteria and 1.9% of ash. In the same manner as described in Example 1, the mixture was fermented and worked up to obtain yogurt. The yogurt thus obtained had a low fat content and therefore it did not have a smooth mouthfeel and its flavor was washy.

### Comparative Example 2

A hydrogenated rapeseed oil (melting point 31°C) (19 parts) was warmed at 60°C and to this were added lecithin (0.05 part), propylene glycol fatty acid ester (0.05 part) and a small amount of an oil-soluble flavor. The mixture was stirred and dissolved to prepare an oil phase. Separately, water (74 parts) was warmed at about 30°C and sodium caseinate (5 parts) and skimmed milk powder (2 parts) were added thereto in portions with stirring by a homomixer to prepare an aqueous phase.

The above oil phase was added to the aqueous phase and the mixture was pre-emulsified at 70°C for 30 minutes and pasteurized at 90°C for 5 minutes. The mixture was homogenized at 100 kg/cm² with a homogenizer and then rapidly cooled to 20°C to prepare a cream mix. The cream mix contained 19.0% of the fat component, 5.2% of the protein component, 65.0% of water, 1.1% of saccharide assimilable by lactic acid bacteria and 0.7% of ash. In the same manner as described in Example 1, the mixture was fermented and worked up to obtain yogurt. The yogurt thus obtained had a texture with smooth melting properties in the mouth. However, the content of the saccharide assimilable by lactic acid bacteria was low and therefore brewing of a fermentation flavor was insufficient.

### Comparative Example 3

In the same manner as described in Comparative Example 2, yogurt was produced except that lactic acid was used instead of lactic acid bacteria and the cream mix was adjusted to 4.2. The yogurt thus obtained had less flavor body because of no lactic acid fermentation and had a sharp stimulative flavor.

The formulations of respective Examples are as follows:

| Components | Example | Comparative Examples | | |
|---|---|---|---|---|
| | 1 | 1 | 2 | 3 |
| | | (parts) | | |
| Cream mix | | | | |
| Hydrogenated rapeseed oil | 19 | 4 | 19 | 19 |
| Skimmed milk powder | 16 | 16 | 2 | 16 |
| Sodium caseinate | 0 | 0 | 5 | 0 |
| Water | 65 | 80 | 74 | 65 |
| Emulsifier | 0.1 | 0.1 | 0.1 | 0.1 |
| Lactic Acid* bacteria for yogurt | 1 | 1 | 1 | 0 |
| Lactic acid | 0 | 0 | 0 | adequate amount |

| | | | | |
|---|---|---|---|---|
| *: mixture of Lactobacillus bulgaricus and Streptococcus thermophilus | | | | |

After pasteurization, the following additives were added.

| Additives | Example | Comparative Examples | | |
|---|---|---|---|---|
| | 1 | 1 | 2 | 3 |
| | | (parts) | | |
| Fermented cream mix | 100 | 100 | 100 | 100 |
| Corn starch | 1 | 1 | 0 | 1 |
| Salt | 0.1 | 0.1 | 0.1 | 0.1 |
| Milk flavor | 0.05 | 0.05 | 0.05 | 0.05 |

The results of evaluation of properties are summarized as follows.

| Items | Commercially available yogurt | Example | Comparative Examples | | |
|---|---|---|---|---|---|
| | | 1 | 1 | 2 | 3 |
| Melting in mouth | good | good | good | good | rough |
| Fermentation flavor | good | good | light | unpleasant | light |
| Strength of flavor | good | very good | very good | not good | good |
| Hardness* | 5 | 50 | 5 | 40 | 40 |

| | | | | | |
|---|---|---|---|---|---|
| *: The hardness of the yogurt (g/0.785 cm²) in terms of the value measured with a Rheometer manufactured by Fudo Kogyo, Japan at a temperature of the product of 5°C by using a plunger of 1 cm diameter at a table moving rate of 5 cm/min. | | | | | |

By using the yogurt obtained in Example 1, Comparative Examples 1, 2, 3 or commercially available yogurt, baked yogurt cake was prepared according to the following formulations and steps.

### Formulation

| Components | g |
|---|---|
| Yogurt | 1000 |
| Sugar | 180 |
| Salt | 1 |
| Butter | 60 |
| Milk | 300 |
| Fresh cream | 150 |
| Whole egg | 220 |
| Lemon peel | peel for one fruit |
| Orange peel steeped in liquor | 70 |
| Wheat flour (low gluten) | 50 |
| Corn starch | 40 |
| Egg white | 100 |
| Sugar to be mixed with egg white | 100 |

### Steps

The above sugar, salt and melted butter were added to the yogurt or commercially available yogurt in a bowl and ground with a whipper to prepare a cream. Then, a mixture of milk, fresh cream and whole egg was slowly added thereto. Further, lemon peel, orange peel steeped in liquor, wheat flour (low gluten) and corn starch were added thereto to form a paste. Separately, egg white and sugar were placed in a bowl and whipped with a whipper to bring the final specific gravity to 0.22 (g/cm³) and obtain a meringue. The meringue was added to the above paste and uniformly mixed to obtain dough. The resultant dough (about 400 g) was filled intoamold (18 cm) whose side wall was coated with shortening. The dough was baked at 180°C of upper and lower heaters for about 40 minutes.

The results of evaluation of the cakes are as follows.

| Items | | Cakes using | | | |
|---|---|---|---|---|---|
| | Commercially available yogurt | Example | Comparative Examples | | |
| | | 1 | 1 | 2 | 3 |
| Mouthfeel mouth | good | good | washy | rough | good |
| Flavor | light | good | light | unpleasant | unpleasant |
| Workability | bad | good | bad | good | good |
| | dehydration required | | dehydration required | | |
| Hardness* | 5 | 50 | 5 | 40 | 40 |

| | | | | | |
|---|---|---|---|---|---|
| *: The hardness of the yogurt (g/0.785 cm²) in terms of the value measured with a Rheometer manufactured by Fudo Kogyo, Japan at a temperature of the product of 5°C by using a plunger of 1 cm diameter at a table moving rate of 5 cm/min. | | | | | |

The baked yogurt cake obtained by using the yogurt of Example 1 showed better properties and flavor in comparison with that obtained by using the yogurt of Comparative Example 1, 2 or 3. Also, in comparison with commercially available yogurt, the baked yogurt cake obtained by using the yogurt of Example 1 has good workability because it requires no dehydration and has a better flavor. Further, its mouthfeel is comparative to the cake obtained by using commercially available yogurt.

Spreadability of the yogurt of the present invention obtained in Example 1 on bread was compared with those of commercially available margarine, mayonnaise and yogurt. The results are as follows.

### Method

Commercially available bread was sliced 1 cm thick and each sample (2 g/leaf) was spread on 2 slices of the bread. A cutlet was sandwiched between them. The sandwich was allowed to stand overnight at ambient temperature and was evaluated.

| Item | Example 1 | Commercially available | | |
|---|---|---|---|---|
| | | Margarine | Mayonnaise | Yogurt |
| Taste | good | good | good | good |
| Texture | good | good | good | good |
| Spreadability | good | not good | good | good |
| Soaking in bread | little | some | little | much |
| Integrity with ingredient | good | bad | bad | bad |

| Change in hardness* according to change in ambient temperature | | | | | |
|---|---|---|---|---|---|
| Temp. (°C) | 5 | 10 | 20 | 30 | 40 |
| Commercially available | | | | | |
| Margarine | 280 | 190 | 70 | 3 | liquid |
| Mayonnaise | 10 | 10 | 11 | 9 | 9 |
| Yogurt | 5 | liquid | liquid | liquid | liquid |
| Example 1 | 23 | 23 | 29 | 11 | 9 |

| | | | | | |
|---|---|---|---|---|---|
| * : The hardness of the yogurt (g/0.785 cm²) in terms of the value measured with a Rheometer manufactured by Fudo Kogyo, Japan at a temperature of the product of 5°C by using a plunger of 1 cm diameter at a table moving rate of 5 cm/min. | | | | | |

As seen of the above comparison, margarine was liquified at above 30°C and lost its spreadability, while the yogurt of Example 1 showed relatively stable spreadability at a temperature range of 5 to 40°C. Also, regarding soaking into bread, the yogurt of Example 1 showed less soaking than commercially available margarine, mayonnaise and yogurt. In addition, when ham or a cutlet was sandwiched between slices of bread, in the case of commercially available margarine, mayonnaise and yogurt slipping resulted, while the yogurt of Example 1 had good compatability with the ingredient.

Heat resistance of the yogurt of Example 1 as a filling ingredient was compared with commercially available yogurt. The results are shown below.

### Method

Commercially frozen pie dough was sheeted 3 mm thick by a sheeter and cut into 10 cm squares. Each sample (8 g) was incrusted with the dough to shape it into a triangle. It was allowed to stand at 1 hour at room temperature and then baked at 210°C for 10 minutes.

### Results

| Item | Example 1 | Commercially available yogurt |
|---|---|---|
| Workability (easiness of pressing) | good | good |
| Baking resistance | | |
| Flavor | good | lost |
| Heat resistance | good | bad |
| Migration of water to dough | little | some |

For the production of an individual packaged spread for marketing at ordinary temperature, the yogurt of Example 1 pasteurized with hot water at 90°C for 30 minutes was compared with that produced by using commercially available yogurt. The results are as follows.

### Method

Each sample of the following tests was filled intoa container (manufactured and sold by Sumitomo Bakelite under the trade name of Cup RE-A70PM) and pasteurized with hot water at 90°C for 30 minutes.

Test (1): Only the yogurt was filled into the container.

Test (2): The yogurt and a fruit jam were filled alternately in a marble pattern.

### Results

### Test (1)

| Item | Example 1 | Commercially available yogurt |
|---|---|---|
| After pasteurization | | |
| Flavor | good | good |
| Properties | | |
| Texture | good (smooth) | bad (hard, crumbly) |
| Syneresis | little | much |

### Test (2)

| Item | Example 1 | Commercially available yogurt |
|---|---|---|
| After pasteurization | | |
| Flavor | good | good |
| Properties | | |
| Texture | good (smooth) | bad (hard, crumbly) |
| Syneresis | little | much |
| Appearance | | |
| Mixing with jam | no | no |

As seen from the above results, after pasteurization with hot water, properties of commercially available yogurt are changed remarkably and, since it shows significant syneresis and a hard and crumbly texture, spreadability is lost. On the contrary, in the product produced by using the yogurt of the present invention, i.e., Example 1, any significant change in properties between before and after pasteurization is not observed and the product maintains good spreadability. As seen from the results of Test 2, no mixing with the fruit jam is observed and the product shows a very good marble appearance in addition to a good taste.

### Example 2

Lecithin (0.05 part), monoglyceride (0.05 part) and a small amount of an oil-soluble flavor were added to a hydrogenated rapeseed oil (melting point: 31°C) (10 parts) with stirring and warming at 60°C to prepare an oil phase. On the other hand, water (60 parts) was warmed to about 30°C and to this was added skimmed milk powder (15 parts) by portions with stirring by a homomixer to prepare an aqueous phase.

The above oil phase and salt-free butter (15 parts) were added to the above aqueous phase and the mixture was pre-homogenized at 70°C for 30 minutes and pasteurized at 90°C for 5 minutes. Then, the mixture was homogenized at 100 kg/cm² with a homogenizer and rapidly cooled to 20°C to prepare a cream mix. The cream mix contained 25% of a fat component, 5.3% of a protein component, 62.3% of water, 8.3% of saccharide assimilable with lactic acid bacteria and 1.9% of ash.

A yogurt starter (mixture of Lactobacillus bulgaricus and Streptococcus thermophilus) (1 part) was added to the above cream mix (100 parts) and fermented at 37°C for 10 hours to obtain a liquid fermented product at pH 4.1. The fermented product was pasteurized with heating at 80°C for 30 minutes and locust bean gum (0.3 part), α-starch (1 part), salt (0.4 part) and a small amount of a flavor were added to the fermented product (100 parts). The mixture was kneaded at 80°C for 10 minutes. Then, the mixture was homogenized at 100 kg/cm², filled into a plastic film tube, sealed and rapidly cooled to 5°C to obtain yogurt.

The resultant product had good spreadability and heat resistance and showed suitably soft and smooth paste-like properties. Also, in comparison with commercially available yogurt, the product had natural body of taste and milk flavor.

As described hereinabove, according to the present invention, it is possible to produce yogurt which has a good taste and flavor and soft paste-like properties, which has good workability for the production of confections, has a hardness hardly affected by ambient temperature, which has suitable compatability with other ingredients with less soaking into bread. Also, a yogurt product obtained by admixing the yogurt with a fruit product has a good appearance as well as a good taste.

## Claims

1. A process for producing yogurt which comprises fermenting a cream mix comprising 2 to 15% by weight of a protein component, 2 to 15% by weight of a carbohydrate assimilable by lactic acid bacteria, 5 to 30% by weight of a fat component, 40 to 80% by weight of water and an emulsifier with a lactic acid bacterium, and prior to, during or after fermentation adding of a stabilizer in an amount of 0.2 to 5% by weight based on the total weight of the cream mix.

2. A process according to claim 1, wherein the stabilizer is added after fermentation.

3. A process according to claim 1, wherein the stabilizer is a member selected from gums, cellulose derivatives and starch.

4. A process according to claim 3, wherein the stabilizer is starch.

5. A process according to claim 1, wherein the emulsifier is added in an amount of 0.05 to 5% by weight based on the weight of the fat component.

6. A yogurt product comprising the yogurt obtained by the process according to claim 1 admixed with a fruit product.

7. Use of a yogurt product produced by a process as claimed in any one of claims 1 to 5 as an ingredient in the production of confections and bakery products.
